# EUROPEAN PATENT APPLICATION

(11) **EP 2 754 902 A2**
(43) Date of publication of application: **16.07.2014**
(21) Application number: 14150726.9
(22) Date of filing: 10.01.2014
(51) Int. Cl.: F16B 39/04

(54) **Threaded fastening system**

(30) Priority: 10.01.2013 SE 1350017
(71) Applicant: Granqvist, Glenn, 772 90 Grängesberg (SE)
(72) Inventor: Granqvist, Glenn, 772 90 Grängesberg (SE)
(74) Representative: Eurenius, Karin Lisa Maria

(57) **Abstract**

A fastening system comprising an externally threaded first fastening member (10) provided with a cavity (11), which cavity (11) has an opening (12) arranged in the treaded part of the fastening member (10), the width of the opening (12) being smaller than the width of the cavity (11). Within the cavity (11), a stopping member (13) is displaceably arranged, whose largest width is larger than the width of the opening (12), and a spring (14) is mounted behind the stopping member (13), against the action of which spring the stopping member (13) is displaceable inwards in the cavity (11) from an advanced position in which part of the stopping member (13) is located outside the opening (12) to a retreated position in which the entire stopping member (13) is located in the cavity (11). The fastening system further comprises an internally threaded second fastening member formed for engagement with the first fastening member (10). The stopping member (13) is in the form of a stopping ball (13) and the second fastening member (20) is in its internal thread provided with a recess, which recess, when located right in front of the opening (12) provided in the first fastening member (10), is adapted to receive a segment of the stopping ball (13).

## Description

### FIELD OF THE INVENTION AND PRIOR ART

The present invention relates to a fastening system with an externally threaded and an internally threaded fastening member, respectively, which fastening system comprises a stopping member to prevent that the fastening members are accidentally unscrewed from each other.

Such a fastening system is previously known through JP9068211. The fastening system described therein comprises an externally partially threaded fastening member in the form of a screw and an internally threaded fastening member in the form of a nut. In the screw is a cavity, in which a spring loaded stopping member is arranged. The stopping member is in the form of a wedge, so that the nut may only be screwed passed the stopping member in one direction. When the nut has been screwed past the stopping member, the stopping member springs up and prevents the nut from being unscrewed from the screw. A disadvantage with this kind of fastening system is that the nut is difficult to loosen from the screw once screwed into its position.

### SUMMARY OF THE INVENTION

An object of the present invention is to provide an in at least some aspect improved fastening system. This object is achieved by a fastening system according to claim 1. Preferred embodiments of the invention are described in the dependent claims.

The fastening system according to the invention comprises
- a completely or partially externally threaded first fastening member provided with a cavity, which cavity has an opening arranged in the treaded part of the fastening member, the width of the opening being smaller than the width of the cavity,
- a within the cavity displaceably arranged stopping member, whose largest width is larger than the width of the opening,
- a spring mounted in the cavity behind the stopping member, against the action of which spring the stopping member is displaceable inwards in the cavity from an advanced position in which part of the stopping member is located outside the opening to a retreated position in which the entire stopping member is located in the cavity,
- an internally threaded second fastening member formed for engagement with the first fastening member. The fastening system is characterized in that the stopping member is in the form of a stopping ball and that the second fastening member in its internal thread is provided with a recess, which recess, when located right in front of the opening provided in the first fastening member, is adapted to receive a segment of the stopping ball.

By means of the fastening system according to the invention, unscrewing of the two fastening members from each other by accident is prevented, although the fastening members can easily be loosened from each other by means of a tool, or by manual power. The design of the stopping member as a stopping ball makes the stopping member rotatable in the cavity. The friction is thereby kept low when the second fastening member is being screwed across the stopping ball and the ware on the internal thread of the second fastening member can thereby me minimized.

According to a preferred embodiment, the cavity exhibits, in a first end in the area of the opening, a section with towards the opening continuously decreasing width. In this embodiment, a relatively large segment of the stopping ball can be located outside the opening in the advanced position, but the opening may still be small enough to keep the stopping ball securely in its position.

According to a preferred embodiment, the cavity is cylindrical or essentially cylindrical, preferably circularly cylindrical. In this embodiment, the cavity can easily be formed by boring.

According to yet another preferred embodiment, the cavity extends in the radial direction of the first fastening member. Since the cavity extends in the radial direction of the externally threaded fastening member, the spring force can be maximally utilized. The cavity is also easy to manufacture.

According to a preferred embodiment, the cavity in a second end exhibits a second opening and the fastening system also comprises a sealing member formed to be engaged with the second end of the cavity from the outside of the first fastening member and to constitute a rest for the spring mounted in the cavity. By means of the second opening, it is easy to manufacture the cavity by for example boring and the stopping ball can be mounted by introduction through the second opening, which does not need to have a width which is smaller than the diameter of the stopping ball.

According to yet another preferred embodiment, the cavity in its second end exhibits an internally threaded section and the sealing member consists of a tension bolt formed for engagement with the internally threaded section, by means of which tension bolt the tension of the spring may be adjusted. The tension of the spring may in this embodiment be adjusted so that the locking of the fastening members in relation to each other becomes more or less easy to loosen. The tension bolt also gives a very secure seal of the cavity.

According to one embodiment, the first fastening member consist of a bolt or a screw and the second fastening member consists of a nut. According to a further embodiment, the first fastening member consist of a wheel bolt and the second fastening member consists of a nut. The fastening system according to this embodiment is adapted for being used for securing wheels on vehicles. This is particularly useful for large motor driven vehicles such as trucks and busses. The fastening system according to this embodiment efficiently prevents accidents in which such heavy vehicles loose a wheel while travelling in consequence of nuts self-loosening from the wheel bolts keeping the wheel in place, because of for example vibrations.

### SHORT DESCRIPTION OF THE DRAWINGS

With reference to the appended drawings, a detailed description of embodiments of the invention follows below.
- Fig. 1a: is a partly cut side view of a second fastening member forming part of a fastening system according to the invention;
- Fig. 1b: schematically shows a cross-section of the fastening member in Fig. 1a;
- Fig. 2a: is a partly cut side view of a part of a first fastening member forming part of a fastening system according to the invention;
- Fig. 2b: is a perspective view of the fastening member in Fig. 2a; and
- Fig. 3: shows a fastening system according to the invention in perspective view.

### DETAILED DESCRIPTION OF EMBODIEMENTS OF THE IN-VENTON

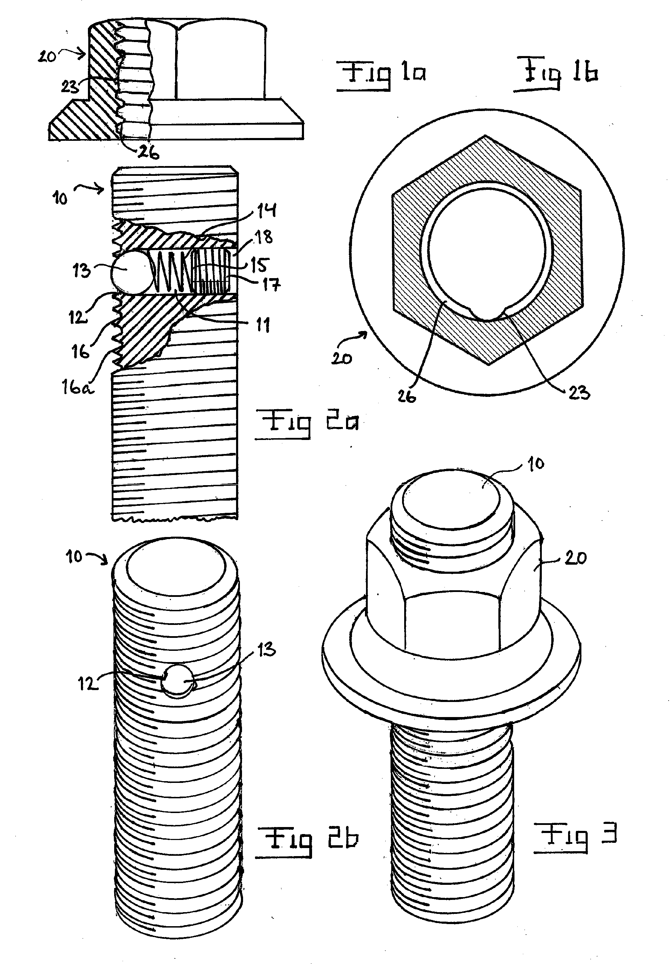

Fig. 3 shows a fastening system according to the invention. The fastening system comprises a first fastening member 10 provided with an external thread 16, here shown in the form of a screw, and an internally threaded second fastening member 20, here shown in the form of a nut. Fig. 2a and Fig. 2b show the first fastening member 10 in larger detail. The first fastening member 10 is provided with a cavity 11 with a first and a second end. In the first end, the cavity has an opening 12 arranged in the threaded part of the first fastening member 10. The width of the opening 12 is smaller than the width of the cavity. In the cavity 11, a stopping member 13 in the form of a stopping ball 13 is mounted, whose diameter is larger than the width of the opening 12. Inside the stopping ball 13 a spring 14 is arranged, which with one end bears on a rest 15 and with its other end bears on the stopping ball 13. The spring 14 is formed so as to load the stopping ball 13 with a spring force so that the stopping ball is pressed in a direction towards the opening 12. In an advanced position, a segment of the stopping ball 13 is located outside the opening 12, so that the from the opening projecting foremost point of the stopping ball is approximately on the same level as the top 16a of the external thread 16. The stopping ball 13 is kept in place in the cavity 11 thanks to that the width of the opening 12 is smaller than the diameter of the stopping ball 13. The spring 14 should be a compression spring and is preferably a cylindrical helical spring.

The second fastening member 20 is shown in side view with partly uncovered thread in Fig. 1a and a cross-section of the second fastening member 20 is shown in Fig. 1b. The second fastening member 20 is provided with an internal thread 26 formed for engagement with the external thread 16 of the first fastening member 10. In the internal thread 26, a recess 23 is arranged, which is formed to be able to receive the segment of the stopping ball 13 which in the advanced position is located outside the opening 12.

Upon use, the first fastening member 10 is engaged with the second fastening member 20 by screwing the threads 16, 26 into one another. When the internal thread 26 of the second fastening member 20 comes into contact with the stopping ball 13, the stopping ball is pressed back, against the action of the spring 14, to a retreated position where the entire stopping ball 13 is located in the cavity 11 inside the opening 12. The stopping ball 13 is in the retreated position until the recess 23 in the internal thread 26 is located right in front of the opening 12. The stopping ball 13 is than advanced by the spring 14 and ends up in the advanced position with a segment of the stopping ball 13 received in the recess 23. The fastening system is thereby secured in this position. In order to continue the screwing, or to screw in the other direction, the screwing has to be performed with such a force that the internal thread 26 of the second fastening member 20 is able to press back the stopping ball 13 into the retreated position again against the action of the spring 14. The tension of the spring 14 can be adapted so that this can be done using a tool, such as a rim wrench, but so that the fastening system cannot self-loosen through for example vibrations. In this way, the fastening system is secured in a position where the second fastening member 20 cannot be loosened from the first fastening member 10 because of for example vibrations, but must be unscrewed on purpose.

According to the embodiment shown in the drawings, the cavity 11 has in its first end, in direct connection with the opening 12, a section in which the width of the cavity 11 decreases continuously towards the opening 12. This section forms a bevelled edge from the cavity towards the opening, so that the stopping ball in the advanced position can be further advanced than what is possible with a straight cut edge.

The cavity 11 is, in the embodiment shown in the drawings, in the form of a circular cylinder which extends in the radial direction of the first fastening member 10. The cavity may of course have a different shape, such as cylindrical with a square as a base. The most important thing is that the design of the cavity 11 allows displacing of the stopping ball 13 from the advanced to the retreated position against the action of the spring 14, and back to the advanced position by the spring force. Preferably, the cavity has a cylindrical or an essentially cylindrical shape.

According to the embodiment shown in the drawings, the cavity 11 is a through-hole in the first fastening member 10, with two openings in the threaded part, on one hand the first opening 12 and on the other hand a second opening 18. In a first end of the cavity 11, the stopping ball 13 is mounted as described above. The second end of the cavity 11 is formed to receive a sealing member 17, which is formed to, through the second opening 18, be engaged with the second end from the outside of the first fastening member 10. The sealing member 17 constitutes, when mounted, the rest 15 against which the spring 14 bears. In the drawings, the sealing member 17 consists of a tension bolt 17, by means of which the tension of the spring 14 may be adjusted. The cavity 11 is in this case in its second end provided with an internal thread adapted for engagement with the tension bolt 17. The cavity 11 and the tension bolt 17 must be so formed that the tension bolt 17 can be located entirely inside the external thread 16 of the first fastening member 10, since it otherwise prevents the second fastening member 20 from being engaged with the first fastening member 10. Instead of using a tension bolt as a sealing member, a sealing member which is fastened in another way can be used. By way of example, a non-threaded bolt, which can be fastened by friction, can be mentioned. It is also possible to seal the cavity in its second end by means of soldering, welding, or similarly.

The fastening system according to the invention is particularly suitable to be used when fastening wheels on heavy motor driven vehicles, such as buses and trucks. The first fastening member 10 in that case consists of an at least partially threaded wheel bolt or wheel screw, and the second fastening member 20 consists of a nut. The cavity 11 in the wheel bolt is arranged so that the fastening system is secured in a position in which the wheel is securely fastened to the hub. The tension of the spring 14 should be so adjusted that the wheel cannot come off the hub as a result of the vibrations arising when the vehicle is driven.

The fastening system according to the invention is also suitable to be used in other applications where vibrations otherwise risk resulting in unscrewing of fastening members from one another by accident, such as for example in wind power plants, water power plants, tools and machines.

The embodiments of the invention described herein are of course only to be regarded as examples. It is obvious that these can be modified within the scope of the invention and the invention is therefore not limited to said embodiments.

## Claims

1. A fastening system comprising
- a completely or partially externally threaded first fastening member (10) provided with a cavity (11), which cavity (11) has an opening (12) arranged in the threaded part of the fastening member (10), the width of the opening (12) being smaller than the width of the cavity (11),
- a within the cavity (11) displaceably arranged stopping member (13), whose largest width is larger than the width of the opening (12),
- a spring (14) mounted in the cavity (11) behind the stopping member (13), against the action of which spring the stopping member (13) is displaceable inwards in the cavity (11) from an advanced position in which part of the stopping member (13) is located outside the opening (12) to a retreated position in which the entire stopping member (13) is located in the cavity (11),
- an internally threaded second fastening member (20) formed for engagement with the first fastening member (10), ***characterized* in**
**that** the stopping member (13) is in the form of a stopping ball (13) and that the second fastening member (20) in its internal thread (26) is provided with a recess (23), which recess (23), when located right in front of the opening (12) provided in the first fastening member (10), is adapted to receive a segment of the stopping ball (13).

2. The fastening system according to claim 1, ***characterized* in that** the cavity (11) in a first end in the area of the opening (12) exhibits a section with towards the opening (12) continuously decreasing width.

3. The fastening system according to any of claims 1 or 2, ***characterized* in that** the cavity (11) is essentially cylindrical, preferably circularly cylindrical.

4. The fastening system according to any of the preceding claims, ***characterized* in that** the cavity (11) extends in the radial direction of the first fastening member (10).

5. The fastening system according to any of the preceding claims, ***characterized* in that** the cavity (11) in a second end exhibits a second opening (18), and that the fastening system also comprises a sealing member (17) formed to be engaged with the second end of the cavity (11) from the outside of the first fastening member (10) and to constitute a rest (15) for the spring (14) mounted in the cavity.

6. The fastening system according to claim 5, ***characterized* in that** the cavity (11) in its second end exhibits an internally threaded section and that the sealing member (17) consists of a tension bolt (17) formed for engagement with the internally threaded section, by means of which tension bolt the tension of the spring (14) may be adjusted.

7. The fastening system according to any of the preceding claims, ***characterized* in that** the first fastening member (10) consists of a bolt or a screw and the second fastening member (20) consist of a nut.

8. The fastening system according to any of the preceding claims, ***characterized* in that** the first fastening member (10) consists of a wheel bolt and the second fastening member (20) consists of a nut.
